(19) Europäisches Patentamt European Patent Office Office européen des brevets

(11) **EP 2 947 200 B1**

(12) **EUROPEAN PATENT SPECIFICATION**

(45) Date of publication and mention
of the grant of the patent:
**22.03.2017 Bulletin 2017/12**

(51) Int Cl.:
**D21C 5/02** *(2006.01)*     **D21H 11/14** *(2006.01)*

(21) Application number: **15161626.5**

(22) Date of filing: **30.03.2015**

(54) **DEINKING AGENT FOR FLOTATION AND METHOD OF PRODUCING REGENERATED PULP**

ENTFÄRBUNGSMITTEL FÜR FLOTATION UND VERFAHREN ZUR HERSTELLUNG VON
REGENERIERTER PULPE

AGENT DE DÉSENCRAGE POUR FLOTATION ET PROCÉDÉ DE PRÉPARATION DE PÂTE À
PAPIER RECYCLÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.04.2014 JP 2014076922**

(43) Date of publication of application:
**25.11.2015 Bulletin 2015/48**

(73) Proprietor: **Lion Specialty Chemicals Co., Ltd.
Sumida-ku
Tokyo 130-8644 (JP)**

(72) Inventors:
• **Ishiguro, Masao
Tokyo (JP)**
• **Hosokawa, Yasutaka
Tokyo (JP)**
• **Yamaguchi, Masayoshi
Tokyo (JP)**
• **Tamura, Masaru
Tokyo (JP)**

(74) Representative: **Cabinet Laurent & Charras
Le Contemporain
50 Chemin de la Bruyère
69574 Dardilly Cedex (FR)**

(56) References cited:
**WO-A1-97/18348     US-A- 5 417 808
US-A- 5 695 603     US-A- 5 807 464
US-A- 5 840 157**

**Description**

BACKGROUND OF THE INVENTION

Field of the Invention

The present invention relates to a deinking agent for flotation and a method of producing regenerated pulp.

Description of Related Art

Obtaining raw papermaking material again by producing regenerated pulp from printed waste paper such as newspaper, communication paper, and copying paper for OA has been performed for many years. In particular, recently, from the viewpoint of effective utilization of the resources or environmental conservation, the importance of regeneration of the printed waste paper has increased, and the application of the regenerated pulp has widened.

A method of producing regenerated pulp (a deinking method of printed waste paper) generally includes a disintegration step of peeling out ink by adding an alkaline agent, a surfactant agent, or the like to printed waste paper (raw material waste paper), and an ink removal step of removing the peeled out ink from the pulp slurry. The ink removal step is roughly classified into a cleaning method and a flotation method.

The cleaning method is a method in which diluting and dewatering of the pulp slurry are repeated, or the peeled out ink is separated from the pulp slurry by using a cleaning device such as a screen or a centrifugal cleaner. The cleaning method requires a large amount of water, and thus it is disadvantageous from the viewpoint of resource conservation or energy conservation.

On the other hand, the flotation method is a method in which air is blown into the pulp slurry by using a flotator, the peeled out ink is adsorbed and floated in generated air bubbles, and the pulp and the ink are separated from each other by discharging and removing foam (froth) which is formed by gathering the air bubbles. The flotation method requires a small amount of water, and thus it is advantageous from a viewpoint of resource conservation or energy conservation (refer to Japanese Unexamined Patent Application, First Publication No. H05-186985).

In the deinking method where the ink peeled out from the raw material waste paper in the disintegration step is removed by the flotation method, a deinking agent is used. The deinking agent is used at the timing of performing at least the flotation step, and may be added to the raw material waste paper from a time point of the disintegration step.

In the deinking agent, suitable foaming properties and high ink collecting properties (adsorptive properties of the ink with respect to the air bubbles) of the flotation step are required. In addition, as described above, the deinking agent may be used by being added to the raw material waste paper from the time point of the disintegration step, and thus in the deinking agent, excellent ink peeling properties of the disintegration step are also required.

As the deinking agent, a nonionic surfactant agent has been widely used in which alkylene oxide is added to higher alcohol, and studies about the structure thereof and an agent used together therewith have been widely conducted. For example, a deinking agent (refer to Japanese Unexamined Patent Application, First Publication No. H05-186985) in which two types of alkylene oxide modified higher alcohol are used together, a deinking agent (refer to Japanese Unexamined Patent Application, First Publication No. H05-263379, Japanese Unexamined Patent Application, First Publication No. H07-3681, Japanese Unexamined Patent Application, First Publication No. 2007-63699, and Japanese Unexamined Patent Application, First Publication No. H06-287878) in which a random polymer of ethylene oxide and alkylene oxide is added to higher alcohol or higher fatty acid ester, and propylene oxide or butylene oxide is arranged on both terminals thereof, and the like have been proposed.

SUMMARY OF THE INVENTION

However, due to the influence of the raw material waste paper which is diversified, a case where printed paper (for example, coated paper such as flier paper, magazine paper, and machine-made paper) including a large amount of ash (mainly, calcium carbonate) in addition to the newspaper or the like is used as the raw material waste paper of the regenerated pulp has increased.

A paper product using regenerated pulp in which a large amount of ash is included may not obtain sufficient strength, and thus it is preferable that the ratio of the ash to the regenerated pulp is low. In addition, a case where the ratio of the ash to the regenerated pulp is low is applied to the paper product using the regenerated pulp, and has wide application. For this reason, it is preferable that the deinking agent has excellent ash removal properties.

However, the deinking agents disclosed in Japanese Unexamined Patent Application, First Publication No. H05-186985, Japanese Unexamined Patent Application, First Publication No. H05-263379, Japanese Unexamined Patent Application, First Publication No. H07-3681, Japanese Unexamined Patent Application, First Publication No. 2007-63699, and Japanese Unexamined Patent Application, First Publication No. H06-287878 did not necessarily satisfy all of the ink peeling properties, foaming properties, ink collecting properties, and ash removal properties.

The invention is made in consideration of the problems described above, and an object of the invention is to provide a deinking agent for flotation having excellent ink peeling properties, foaming properties, ink collecting properties, and ash removal properties, and a method of producing regenerated pulp.

The invention includes the following aspects.

[1] A deinking agent for flotation containing an (a) component which is a nonionic surfactant agent represented by the following General Formula (I).

$$R\text{-}O\text{-}(PO)_p\text{-}[(EO)_m/(PO)_n]\text{-}(PO)_q\text{-}H \qquad (I)$$

(In Formula (I), R represents an alkyl group or an alkenyl group having 12 to 24 carbon atoms, PO represents an oxypropylene group, EO represents an oxyethylene group, p represents the average number of repetitions of PO which is 1 to 15, m represents the average number of repetitions of EO which is 31 to 60, n represents the average number of repetitions of PO which is 1 to 15, and q represents the average number of repetitions of PO which is 3 to 30. $[(EO)_m/(PO)_n]$ represents random addition of EO and PO.)

[2] The deinking agent for flotation according to [I], in which p, m, n, and q satisfy the following Expression (1).

$$61 \le p + m + n + q \le 120 \quad ...(1)$$

[3] The deinking agent for flotation according to [1] or [2], in which p, m, n, and q further satisfy the following Expression (2) and the following Expression (3).

$$0.55 \le m / (p + m + n + q) \le 0.65 \quad ...(2)$$

$$0.60 \le (m + n) / (p + m + n + q) \le 0.75 \quad ...(3)$$

[4] The deinking agent for flotation according to any one of [1] to [3], further containing a (b) component which is a fatty acid having 12 to 24 carbon atoms or a salt thereof.

[5] The deinking agent for flotation according to [4], in which a mass ratio represented by (a) component/(b) component is 40/60 to 99/1.

[6] A method of producing regenerated pulp which obtains the regenerated pulp by peeling out ink from raw material waste paper, and by removing the peeled out ink using a flotation method, the method including removing the ink by using the deinking agent for flotation according to any one of [1] to [5].

In addition, as another aspect of the invention, the following aspects are able to be included.

[7] Use of an (a) component which is a nonionic surfactant agent represented by the following General Formula (I) in order to perform deinking in flotation.

$$R\text{-}O\text{-}(PO)_p\text{-}[(EO)_m/(PO)_n]\text{-}(PO)_q\text{-}H \qquad (I)$$

(In Formula (I), R represents an alkyl group or an alkenyl group having 12 to 24 carbon atoms, PO represents an oxypropylene group, EO represents an oxyethylene group, p represents the average number of repetitions of PO which is 1 to 15, m represents the average number of repetitions of EO which is 31 to 60, n represents the average number of repetitions of PO which is 1 to 15, and q represents the average number of repetitions of PO which is 3 to 30. $[(EO)_m/(PO)_n]$ represents random addition of EO and PO.)

[8] The use according to [7], in which p, m, n, and q satisfy the following Expression (1).

$$61 \le p + m + n + q \le 120 \quad ...(1)$$

[9] The use according to [7] or [8], in which p, m, n, and q further satisfy the following Expression (2) and the following Expression (3).

$$0.55 \leq m / (p + m + n + q) \leq 0.65 \quad ...(2)$$

$$0.60 \leq (m + n) / (p + m + n + q) \leq 0.75 \quad ...(3)$$

[10] The use according to any one of [7] to [9], in which a (b) component which is a fatty acid having 12 to 24 carbon atoms or a salt thereof is used together therewith.

[11] The use according to [10], in which a mass ratio represented by (a) component/(b) component is 40/60 to 99/1.

According to the invention, it is possible to provide a deinking agent for flotation having excellent ink peeling properties, foaming properties, ink collecting properties, and ash removal properties, and a method of producing regenerated pulp.

DETAILED DESCRIPTION OF THE INVENTION

Deinking Agent for Flotation

A deinking agent for flotation (hereinafter, simply referred to as a "deinking agent") of the invention contains the following (a) component. In addition, it is preferable that the deinking agent further contains the following (b) component.

Furthermore, when the deinking agent contains the (a) component, the (b) component, and as necessary, arbitrary components, the deinking agent may be in a mixed state where the (a) component, the (b) component, and as necessary, the arbitrary components are mixed, or the (a) component, the (b) component, and as necessary, the arbitrary components may be separately prepared.

(a) Component

The (a) component is a nonionic surfactant agent represented by the following General Formula (I). The deinking agent contains the (a) component, and thus has excellent ink peeling properties, foaming properties, ink collecting properties, and ash removal properties.

$$R-O-(PO)_p-[(EO)_m/(PO)_n]-(PO)_q-H \; ... \qquad (I)$$

(In Formula (I), R represents an alkyl group or an alkenyl group having 12 to 24 carbon atoms, PO represents an oxypropylene group, EO represents an oxyethylene group, p represents the average number of repetitions of PO which is 1 to 15, m represents the average number of repetitions of EO which is 31 to 60, n represents the average number of repetitions of PO which is 1 to 15, and q represents the average number of repetitions of PO which is 3 to 30. $[(EO)_m/(PO)_n]$ represents a random addition of EO and PO.)

The ink peeling properties and the ink collecting properties are mainly affected by R, EO, and PO in Formula (I), and the foaming properties and the ash removal properties mainly depend on EO and PO in Formula (I). In addition, EO and PO contribute to low temperature liquidity.

R in Formula (I) represents an alkyl group having 12 to 24 carbon atoms or an alkenyl group having 12 to 24 carbon atoms. It is preferable that the number of carbon atoms of each of the alkyl group and the alkenyl group is 14 to 20. Each of the alkyl group and the alkenyl group may be linear or branched, and it is preferable that each of the alkyl group and the alkenyl group is linear. In addition, the number of double bonds included in the alkenyl group is preferably 1 to 3, and is more preferably 1 to 2, and it is particularly preferable that the number of double bonds included in the alkenyl group is 1. When the number of carbon atoms of the alkyl group and the alkenyl group is greater than or equal to 12, the ink collecting properties are improved, and when the number of carbon atoms of the alkyl group and the alkenyl group is less than or equal to 24, the ink peeling properties are improved.

p represents the average number of repetitions (the average addition molar number) of PO which is 1 to 15, and 2 to 10 is preferable. When p is greater than or equal to 1, the ink peeling properties, the ink collecting properties, and the ash removal properties are improved, and when p is less than or equal to 15, the ink collecting properties and the ash removal properties are improved.

m represents the average number of repetitions (the average addition molar number) of EO which is 31 to 60, and 37 to 50 is preferable. When m is greater than or equal to 31, the foaming properties, the ink collecting properties, and the ash removal properties are improved, and when m is less than or equal to 60, the ink collecting properties and the ash removal properties are improved. Furthermore, when m exceeds 60, foaming may be easily performed, or the defoaming properties may decrease.

n represents the average number of repetitions of PO which is 1 to 15, and 3 to 10 is preferable. When n is within the range described above, the foaming properties, the ink collecting properties, and the ash removal properties are improved.

q represents the average number of repetitions of PO which is 3 to 30, and 5 to 25 is preferable. When q is greater than or equal to 3, the ink collecting properties and the ash removal properties are improved, and when q is less than or equal to 30, the ink peeling properties, the foaming properties, the ink collecting properties and the ash removal properties are improved.

The random addition of EO and PO indicates that m EO and n PO are copolymerized in a state where m EO and n PO are arranged in a disorderly manner.

It is preferable that p, m, n, and q satisfy the following Expression (1).

$$61 \le p + m + n + q \le 120 \quad ...(1)$$

p + m + n + q indicates the total average number of repetitions (the total average addition molar number) of all of AO (the oxyalkylene group) in the nonionic surfactant agent represented by General Formula (I), p + m + n + q is preferably 61 to 120, and 61 to 85 is more preferable. When p + m + n + q is within the range described above, the ink collecting properties and the ash removal properties are further improved.

In addition, it is preferable that p, m, n, and q further satisfy the following Expression (2) and the following Expression (3).

$$0.55 \le m / (p + m + n + q) \le 0.65 \quad ...(2)$$

$$0.60 \le (m + n) / (p + m + n + q) \le 0.75 \quad ...(3)$$

m/(p+m+n+q) indicates the ratio of EO to all of AO in the nonionic surfactant agent represented by General Formula (I), and it is preferable that m / (p + m + n + q) is 0.55 to 0.65. When m / (p + m + n + q) is greater than or equal to 0.55, the foaming properties are further improved, and when m / (p + m + n + q) is less than or equal to 0.65, it is possible to preferably maintain affinity with respect to ink, and the ink collecting properties and the ash removal properties are further improved.

On the other hand, (m + n) / (p + m + n + q) indicates a random ratio of all of AO to the nonionic surfactant agent represented by General Formula (I), and it is preferable that (m + n) / (p + m + n + q) is 0.60 to 0.75. When (m + n) / (p + m + n + q) is greater than or equal to 0.60, the foaming properties and the ash removal properties are further improved, and when (m + n) / (p + m + n + q) is less than or equal to 0.75, the ink collecting properties and the ash removal properties are further improved.

The nonionic surfactant agent represented by General Formula (I) is able to be produced by a known method. For example, first, 1 mol to 15 mol of propylene oxide is added to 1 mol of aliphatic alcohol having 12 to 24 carbon atoms, and thus a PO adduct is produced. 31 mol to 60 mol of ethylene oxide and 1 mol to 15 mol of propylene oxide are added to the PO adduct, and thus a PO-EO/PO adduct is produced. 3 mol to 30 mol of propylene oxide is added to the PO-EO/PO adduct, and thus the nonionic surfactant agent represented by General Formula (I) is obtained.

One of the (a) components may be independently used, or two or more of them may be used together.

(b) Component

The (b) component is a fatty acid having 12 to 24 carbon atoms or a salt thereof. The deinking agent contains the (b) component, and thus the ash removal properties are further improved.

The number of carbon atoms of the fatty acid is 12 to 24, and is preferably 14 to 20. The carbon chain may be linear or branched. When the number of carbon atoms of the fatty acid is greater than or equal to 12, the ink collecting properties are further improved, and when the number of carbon atoms of the fatty acid is less than or equal to 24, it is possible to preferably maintain handling properties at a low temperature, and the fatty acid or the salt thereof is able to be used without warming, and thus it is possible to reduce the cost.

As the fatty acid having 12 to 24 carbon atoms, either a saturated fatty acid or unsaturated fatty acid may be used. Specifically, a saturated fatty acid such as a lauric acid, a myristic acid, a palmitic acid, a stearic acid, an arachidic acid, or a behenic acid; an unsaturated fatty acid such as an oleic acid, a linoleic acid, a linolenic acid, or an arachidonic acid, and the like can be exemplified.

The salt of the fatty acid is not particularly limited insofar as the salt is a salt of the fatty acid, and is able to be suitably selected according to the object. Specifically, a salt of the fatty acid and alkali metal such as sodium and potassium; alkaline earth metals such as calcium and magnesium; and organic amines such as methyl amine, ethyl amine, and diethanol amine, or the like can be exemplified. Among them, a sodium salt is preferable from the viewpoint of cost and odor.

One of the (b) components may be independently used, or two or more of them may be used together. That is, as the (b) component, the fatty acid having 12 to 24 carbon atoms may be independently used, the salt of the fatty acid having 12 to 24 carbon atoms may be independently used, one or a plurality of fatty acids having 12 to 24 carbon atoms and one or a plurality of salts of the fatty acids having 12 to 24 carbon atoms may be used together, different fatty acids having 12 to 24 carbon atoms may be used together, or different salts of the fatty acid having 12 to 24 carbon atoms may be used together.

When the deinking agent contains the (b) component, the mass ratio represented by (a) component/(b) component is preferably 40/60 to 99/1, is more preferably 50/50 to 98/2, and is further preferably 70/30 to 95/5. When the mass ratio is within the range described above, the effect of improvement of the ash removal properties is easily exhibited. In particular, when the mass ratio is greater than or equal to 40/60, the foaming properties are further improved, and the ratio of the (a) component is sufficient, and thus the improvement effect of the ink peeling properties and the ash removal properties is able to be sufficiently obtained. On the other hand, when the mass ratio is less than or equal to 99/1, the addition effect of the (b) component is sufficiently exhibited, and the improvement effect of the ink collecting properties and the ash removal properties are able to be sufficiently obtained.

Arbitrary Component(s)

When the deinking agent of the invention is within the range not impairing the effect of the invention, a surfactant agent other than the (a) component and the (b) component (hereinafter, referred to as "the other surfactant agent") may be contained in the deinking agent.

As the other surfactant agent, for example, an anionic surfactant agent such as an alkyl benzene sulfonic acid salt (for example, an alkyl benzene sulfonic acid salt in which the number of carbon atoms of alkyl is 12 to 24), an $\alpha$-olefin sulfonic acid salt (for example, an $\alpha$-olefin sulfonic acid salt in which the number of carbon atoms of olefin is 12 to 24), an alcohol sulfuric ester salt (for example, an alcohol sulfuric ester salt in which the number of carbon atoms of alcohol is 12 to 24), and dialkyl sulfosuccinate (for example, dialkyl sulfosuccinate in which the number of carbon atoms of alkyl is 12 to 24); a nonionic surfactant agent formed of an alkylene oxide adduct such as a fatty acid (for example, a fatty acid having 12 to 24 carbon atoms), and alkanolamide (for example, alkanolamide in which the number of carbon atoms of alkanol is 12 to 24), and the like can be exemplified.

One of the other surfactant agents may be independently used, or two or more of them may be used together.

Furthermore, as described later, from the viewpoint of handling, the deinking agent of the invention may be used after being diluted with water, or may be used by being mixed with other agents.

Action Effect

The deinking agent of the invention described above contains the (a) component described above, and thus has excellent ink peeling properties, foaming properties, ink collecting properties, and ash removal properties. In particular, when the (a) component and the (b) component are used together, the ash removal properties are further improved.

Accordingly, when the deinking agent of the invention is used for regeneration of printed waste paper, it is possible to obtain regenerated pulp having high quality in which ash is sufficiently removed.

Method of producing Regenerated Pulp

A method of producing regenerated pulp of the invention is a method in which ink is peeled out from raw material waste paper, and the peeled out ink is removed by a flotation method, and thus regenerated pulp is obtained, and removes the ink by using the deinking agent of the invention described above.

Specifically, it is preferable that the method of producing regenerated pulp includes a disintegration step, and a flotation step in this order, and as necessary, other steps are further included.

The deinking agent of the invention may be used at the timing of performing at least the flotation step. As the timing of adding the deinking agent to the system, the deinking agent may be added from the time point of the disintegration step, may be added from a time point of the flotation step, or may be added in both of the disintegration step and the flotation step. The deinking agent of the invention has excellent ink peeling properties in addition to excellent foaming properties, ink collecting properties, and ash removal properties, and thus it is preferable that the deinking agent of the invention is added from the time point of the disintegration step.

When the deinking agent contains the (b) component, or as necessary, the arbitrary components in addition to the (a) component, each component may be added to pulp slurry described later in a state where the respective components are mixed in advance, or each of the components may be separately added to the pulp slurry.

Disintegration Step

The disintegration step is a step of disintegrating the raw material waste paper into fibrous pulp, and of peeling out the ink from the pulp.

A method of peeling out the ink from the raw material waste paper is not particularly limited, and for example, a method in which other agents (hereinafter, referred to as "the other agent") other than the deinking agent of the invention are added to the raw material waste paper, and water is added so as to reach a desired solid content concentration, and is stirred, or the like. When the deinking agent of the invention is added from the time point of the disintegration step, before or after the other agent is added, or at the same time as the addition of the other agent, the deinking agent is added to the raw material waste paper.

Hereinafter, a suspension liquid including at least the raw material waste paper, other agent(s), and water is referred to as "pulp slurry".

The raw material waste paper is not particularly limited insofar as paper is printed with ink, is able to be suitably selected according to the object, and may be coated paper or non-coated paper.

As a specific example of the raw material waste paper, newspaper (neutral newspaper, acidic newspaper, or the like), magazine paper, communication paper, flier paper, machine-made paper, copying OA waste paper (copy, computer output, or the like), and the like are included. One of these may be independently used, or two or more of these may be used together.

The raw material waste paper may be directly used, or the raw material waste paper subjected to a pretreatment may be used in which cutting, fracturing, pulverization, and the like are suitably combined.

A solid content concentration (a solid pulp content concentration) of the pulp slurry in the disintegration step is not particularly limited, and is able to be suitably selected according to the object and the disintegration device to be used, in general, the solid content concentration with respect to the total mass of the pulp slurry is preferably 2 mass% to 35 mass%, and is more preferably 3 mass% to 30 mass%. When the solid content concentration of the pulp slurry is greater than or equal to 2 mass%, it is economically advantageous, and when the solid content concentration of the pulp slurry is less than or equal to 35 mass%, the disintegration is sufficiently achieved.

The solid content concentration of the pulp slurry is able to be adjusted by adding water after the other agent is added. Furthermore, when the deinking agent of the invention is added from the time point of the disintegration step, the solid content concentration of the pulp slurry may be adjusted by adding water after the other agent and the deinking agent are added.

Here, in the invention, the solid content of the raw material waste paper and the solid pulp content of the pulp slurry indicate a dried product which is obtained after drying the raw material waste paper or the pulp slurry at 80°C to 90°C for 18 hours.

The other agent is not particularly limited insofar as the other agent is an agent used in the regeneration of the printed waste paper, is able to be suitably selected according to the object, and for example, an alkaline agent such as sodium hydroxide, potassium hydroxide, sodium carbonate, and sodium silicate; and a bleaching agent such as hydrogen peroxide, and sodium hypochlorite; a chelating agent such as EDTA, and DTPA, and the like are included. Among these, sodium hydroxide, and sodium silicate are preferable.

One of the other agents may be independently used, or two or more of them may be used together.

An added amount of the other agent in the disintegration step is not particularly limited, and is able to be suitably selected according to the object, in general, the added amount of the other agent is preferably less than or equal to 3 parts by mass with respect to 100 parts by mass of the solid content (the solid pulp content) of the raw material waste paper, and is more preferably less than or equal to 2 parts by mass. When the added amount of the other medical agent is less than or equal to 3 parts by mass, regenerated pulp having high strength is easily obtained.

When the deinking agent of the invention is added from the time point of the disintegration step, an added amount of the deinking agent is not particularly limited, and is able to be suitably selected according to the object, in general, the added amount of the deinking agent is preferably 0.03 parts by mass to 0.5 parts by mass with respect to 100 parts by mass of the solid content (the solid pulp content) of the raw material waste paper, and is more preferably 0.1 parts by mass to 0.3 parts by mass. When the added amount of the deinking agent is greater than or equal to 0.03 parts by mass, the effect of the deinking agent is sufficiently obtained, and when the added amount of the deinking agent is less than or equal to 0.5 parts by mass, it is possible to prevent the amount of foaming from excessively increasing.

The deinking agent may be used in a state of being diluted with water in order to be easily handled. When the deinking agent is diluted with water, it is preferable that 5 parts by mass or more of water be added to 100 parts by mass of the deinking agent.

In addition, the deinking agent and the other agent may be mixed in advance, and may be added to the raw material waste paper in a mixed state.

In the invention, a mixture of the deinking agent or the deinking agent diluted with water, and the other agent is referred to as a "deinking agent composition."

The pH of the pulp slurry in the disintegration step is not particularly limited, and is able to be suitably selected according to the object, in general, the pH of the pulp slurry is preferably 7 to 13, and is more preferably 8 to 12.5. When the pH of the pulp slurry is greater than or equal to 7, the raw material waste paper is easily disintegrated into fibrous pulp, and when the pH of the pulp slurry is less than or equal to 13, regenerated pulp having high strength is easily obtained.

The temperature (a disintegration temperature) of the disintegration step is not particularly limited, and is able to be suitably selected according to the object, in general, the temperature is preferably 10°C to 100°C, and is more preferably 20°C to 80°C. When the disintegration temperature is higher than or equal to 10°C, the raw material waste paper is easily disintegrated into fibrous pulp, and when the disintegration temperature is lower than or equal to 100°C, regenerated pulp having high strength is easily obtained.

The period of time for performing the disintegration step (a disintegration time) is not particularly limited, and is able to be suitably selected according to the object, in general, the time is preferably 5 minutes to 60 minutes, and is more preferably 8 minutes to 50 minutes. When the disintegration time is greater than or equal to 5 minutes, the raw material waste paper is easily disintegrated into fibrous pulp, and when the disintegration time is less than or equal to 60 minutes, regenerated pulp having high strength is easily obtained.

In the disintegration step, various devices are able to be used. As the device used in the disintegration step, for example, a low concentration pulper, a high concentration pulper, a hot disperser, a kneader, mica, fiber flow, and the like can be exemplified.

Flotation Step

The flotation step is a step of performing a flotation treatment with respect to the pulp slurry obtained in the disintegration step in the presence of the deinking agent, and of separating the pulp and the ink from each other. At this time, the ink in the pulp slurry is trapped along with foam (froth), and thus the regenerated pulp from which the ink is peeled out is able to be obtained.

It is preferable that the flotation step is performed while blowing air thereon.

The solid content concentration (the solid pulp content concentration) of the pulp slurry which is processed in the flotation step is not particularly limited, and is able to be suitably selected according to the object, in general, the solid content concentration of the pulp slurry is preferably 0.5 mass% to 3 mass%, and is more preferably 0.7 mass% to 2.5 mass%. When the solid pulp content concentration is greater than or equal to 0.5 mass%, the amount of foaming does not excessively increase, and when the solid pulp content concentration is less than or equal to 3 mass%, it is difficult for the amount of foaming to be insufficient.

The solid pulp content concentration is able to be adjusted by adding water to the pulp slurry.

In addition, the concentration of the deinking agent in the pulp slurry which is processed in the flotation step is not particularly limited, and is able to be suitably selected according to the object, in general, the concentration of the deinking agent is preferably 0.03 parts by mass to 0.5 parts by mass with respect to 100 parts by mass of the solid content (the solid pulp content) of the pulp slurry, and is more preferably 0.1 parts by mass to 0.3 parts by mass. When the concentration of the deinking agent is greater than or equal to 0.03 parts by mass, the effect of the deinking agent is sufficiently obtained, and when the concentration of the deinking agent is less than or equal to 0.5 parts by mass, it is possible to prevent the amount of foaming from excessively increasing.

Furthermore, when the deinking agent is added from the time point of the flotation step, or when the deinking agent is added in the disintegration step and in the flotation step, it is preferable that the added amount of the deinking agent is adjusted such that the concentration of the deinking agent in the pulp slurry which is processed in the flotation step is within the range described above.

The pH of the pulp slurry in the flotation step is not particularly limited, and is able to be suitably selected according to the object, in general, the pH of the pulp slurry is preferably 7 to 12, and is more preferably 8 to 11. When the pH of the pulp slurry is greater than or equal to 7, it is possible to preventing the amount of foaming from being insufficient, when the pH of the pulp slurry is less than or equal to 13, it is possible to prevent the amount of foaming from excessively increasing.

The temperature (a flotation temperature) of the flotation step is not particularly limited, and is able to be suitably selected according to the object, in general, the temperature is preferably 20°C to 60°C, and is more preferably 30°C to 50°C. When the flotation temperature is higher than or equal to 20°C, it is possible to preventing the amount of foaming from being insufficient, and when the flotation temperature is lower than or equal to 60°C, it is possible to preferably maintain ink collecting properties.

The period of time of performing the flotation step (a flotation time) is not particularly limited, and is able to be suitably selected according to the object.

In the flotation step, various devices are able to be used. As the device used in the flotation step, for example, various flotators such as a BOX type flotator, an eco-cell type flotator, an MT flotator, and an OK flotator, and the like can be exemplified.

Other Steps

The other steps are not particularly limited, are able to be suitably selected according to the object, and for example, include a dedusting step, a cleaning step, a dewatering step, a drying step, and the like.

Dedusting Step

The dedusting step is a step of removing foreign materials such as dust from the pulp slurry which is obtained in the disintegration step, and it is preferable that the dedusting step is performed before the flotation step.

A method of removing the foreign material from the pulp slurry is not particularly limited, is able to be suitably selected according to the object, and for example, includes a method using a sieve, and the like. The opening of the sieve is not particularly limited insofar as the opening does not allow the foreign material to pass therethrough and allows the pulp slurry to pass therethrough, and is able to be suitably selected according to the object of the step.

Cleaning Step

The cleaning step is a step of cleaning the regenerated pulp which is obtained in the flotation step.

The method of cleaning the regenerated pulp is not particularly limited, is able to be suitably selected according to the object, and for example, includes a method in which the regenerated pulp is filtered using filter fabric, and is further filtered by adding water to the regenerated pulp remaining on the filter fabric, and the like.

The cleaning step may be performed a plurality of times.

Dewatering Step

The dewatering step is a step of removing moisture from the slurry including regenerated pulp which is obtained in the flotation step.

The method of removing the moisture from the slurry including the regenerated pulp is not particularly limited, is able to be suitably selected according to the object, and for example, a filtering method; a method using a known pressure dehydrator (for example, screw press or the like), and the like can be exemplified.

Drying Step

The drying step is a step of drying the regenerated pulp which is obtained in the flotation step.

A method of drying the regenerated pulp is not particularly limited, is able to be suitably selected according to the object, and for example, a natural drying method; a drying method using a known drier, and the like can be exemplified.

Action Effect

The method of producing regenerated pulp of the invention described above removes the peeled out ink from the raw material waste paper by using the deinking agent of the invention, and thus the ink is more efficiently trapped in the suitable amount of froth having high quality in the flotation step, and ash is also removed. Therefore, according to the method of producing regenerated pulp of the invention, it is possible to produce the regenerated pulp having high quality. In particular, when the deinking agent of the invention is used from the time point of the disintegration step, the ink is efficiently peeled out from the raw material waste paper due to high ink peeling properties therein.

Examples

Hereinafter, the invention will be described in detail with reference to examples, but the invention is not limited to the following description. Furthermore, the amount of blending of components used in each example is a pure conversion value unless otherwise specifically noted.

Used Raw Material

As the (a) component, the following compounds were used.

- (a-1): a nonionic surfactant agent (R is an alkyl group having 18 carbon atoms ($C_{18}H_{37}$-), p = 6, m = 40, n = 5, and q = 17 in General Formula (I))
- (a-2): a nonionic surfactant agent (R is an alkyl group having 18 carbon atoms ($C_{18}H_{37}$-), p = 6, m = 35, n = 5, and q = 15 in General Formula (I))
- (a-3): a nonionic surfactant agent (R is an alkyl group having 18 carbon atoms ($C_{18}H_{37}$-), p = 6, m = 31, n = 5, and q = 15 in General Formula (I))
- (a-4): a nonionic surfactant agent (R is an alkyl group having 18 carbon atoms ($C_{18}H_{37}$-), p = 2, m = 60, n = 10, and q = 30 in General Formula (I))
- (a-5): a nonionic surfactant agent (R is an alkyl group having 18 carbon atoms ($C_{18}H_{37}$-), p = 15, m = 40, n = 10, and q = 3 in General Formula (I))
- (a-6): a nonionic surfactant agent (R is an alkyl group having 18 carbon atoms ($C_{18}H_{37}$-), p = 4, m = 50, n = 5, and q = 30 in General Formula (I))
- (a-7): a nonionic surfactant agent (R is an alkyl group having 12 carbon atoms ($C_{12}H_{25}$-), p = 15, m = 45, n = 3, and q = 15 in General Formula (I))
- (a-8): a nonionic surfactant agent (R is an alkyl group having 16 carbon atoms ($C_{16}H_{33}$-), p = 10, m = 40, n = 5, and q = 17 in General Formula (I))
- (a-9): a nonionic surfactant agent (R is an alkyl group having 22 carbon atoms ($C_{22}H_{45}$-), p = 2, m = 45, n = 15, and q = 20 in General Formula (I))
- (a-10): a nonionic surfactant agent (R is an alkenyl group having 18 carbon atoms ($C_{18}H_{35}$-), p = 8, m = 41, n = 10, and q = 15 in General Formula (I))
- (a-11): a nonionic surfactant agent (R is a mixture of an alkyl group having 16 carbon atoms ($C_{16}H_{33}$-) and an alkyl group having 18 carbon atoms ($C_{18}H_{37}$-), p = 6, m = 40, n = 10, and q = 15 in General Formula (I))
- (a'-1): a nonionic surfactant agent (R is an alkyl group having 18 carbon atoms ($C_{18}H_{37}$-), p = 6, m = 40, n = 0, and q = 22 in General Formula (I))
- (a'-2): a nonionic surfactant agent (R is an alkyl group having 18 carbon atoms ($C_{18}H_{37}$-), p = 6, m = 45, n = 10, and q = 0 in General Formula (I))
- (a'-3): a nonionic surfactant agent (R is an alkyl group having 18 carbon atoms ($C_{18}H_{37}$-), p = 10, m = 30, n = 10, and q = 10 in General Formula (I))
- (a'-4): a nonionic surfactant agent (R is an alkyl group having 18 carbon atoms ($C_{18}H_{37}$-), p = 0, m = 35, n = 5, and q = 22 in General Formula (I))
- (a'-5): a nonionic surfactant agent (R is an alkyl group having 18 carbon atoms, ($C_{18}H_{37}$-) p = 20, m = 40, n = 5, and q = 5 in General Formula (I))
- (a'-6): a nonionic surfactant agent (R is an alkyl group having 18 carbon atoms ($C_{18}H_{37}$-), p = 2, m = 80, n = 15, and q = 20 in General Formula (I))
- (a'-7): a nonionic surfactant agent (R is an alkyl group having 18 carbon atoms ($C_{18}H_{37}$-), p = 4, m = 60, n = 20, and q = 20 in General Formula (I))
- (a'-8): a nonionic surfactant agent (R is an alkyl group having 18 carbon atoms ($C_{18}H_{37}$-), p = 2, m = 25, n = 5, and q = 35 in General Formula (I))
- (a'-9): a nonionic surfactant agent (R is an alkyl group having 18 carbon atoms, ($C_{18}H_{37}$-) p = 15, m = 70, n = 15, and q = 25 in General Formula (I))
- (a'-10): a nonionic surfactant agent ($C_{18}H_{37}$-O-$(BO)_6$-$[(EO)_{40}/(PO)_5]$-$(BO)_{17}$-H, and "BO" represents an oxybutylene group)
- (a'-11): a nonionic surfactant agent (R is an acyl group having 17 carbon atoms ($C_{17}H_{35}CO$-), p = 6, m = 40, n = 5, and q = 17 in General Formula (I))
- (a'-12): a nonionic surfactant agent (as a synthesis starting substance corresponding to R in General Formula (I), glycerin is used, and PO and EO are added and synthesized, p = 5, m = 40, n = 10, and q = 10)

Synthesis Method of (a-1):

Stearyl alcohol (1 mol) and a catalytic amount of potassium hydroxide were put into an autoclave, the inside environment of the autoclave was substituted with nitrogen, and then dewatering was performed under reduced pressure.

Next, propylene oxide (6 mol) was introduced while maintaining the temperature inside the autoclave at 125°C, and the pressure thereof to be less than or equal to 0.294 MPa, and was reacted while being stirred, and thus a PO adduct was obtained (a first stage).

Subsequently, ethylene oxide (40 mol) and propylene oxide (5 mol) were introduced while maintaining the temperature inside the autoclave at 160°C, and the pressure thereof to be less than or equal to 0.294 MPa, and were reacted while being stirred, and thus a PO-EO/PO adduct was obtained (a second stage).

Subsequently, propylene oxide (17 mol) was introduced while maintaining the temperature inside the autoclave at 125°C, and the pressure thereof to be less than or equal to 0.294 MPa, and was reacted while being stirred (a third stage), and then was cooled, was adjusted to be a pH of 6 to 8 by using an acetic acid, and thus a nonionic surfactant agent (a-1) was obtained.

Synthesis Methods of (a-2) to (a-6), and (a'-1) to (a'-9):

Nonionic surfactant agents (a-2) to (a-6), and (a'-1) to (a'-9) were obtained by the same method as that in the nonionic surfactant agent (a-1) except that the molar quantity of propylene oxide used in the first stage, ethylene oxide and propylene oxide used in the second stage, and propylene oxide used in the third stage was changed such that p, m, n, and q in General Formula (I) have the values shown in Tables 1 to 3.

Synthesis Method of (a-7):

A nonionic surfactant agent (a-7) was obtained by the same method as that in the nonionic surfactant agent (a-1) except that lauryl alcohol (1 mol) was used instead of stearyl alcohol (1 mol), and the molar quantity of propylene oxide used in the first stage, ethylene oxide and propylene oxide used in the second stage, and propylene oxide used in the third stage was changed such that p, m, n, and q in General Formula (I) have the values shown in Table 1.

Synthesis Method of (a-8):

A nonionic surfactant agent (a-8) was obtained by the same method as that in the nonionic surfactant agent (a-1) except that palmityl alcohol (1 mol) was used instead of stearyl alcohol (1 mol), and the molar quantity of propylene oxide used in the first stage, ethylene oxide and propylene oxide used in the second stage, and propylene oxide used in the third stage was changed such that p, m, n, and q in General Formula (I) have the values shown in Table 1.

Synthesis Method of (a-9):

A nonionic surfactant agent (a-9) was obtained by the same method as that in the nonionic surfactant agent (a-1) except that behenyl alcohol (1 mol) was used instead of stearyl alcohol (1 mol), and the molar quantity of propylene oxide used in the first stage, ethylene oxide and propylene oxide used in the second stage, and propylene oxide used in the third stage was changed such that p, m, n, and q in General Formula (I) have the values shown in Table 1.

Synthesis Method of (a-10):

A nonionic surfactant agent (a-10) was obtained by the same method as that in the nonionic surfactant agent (a-1) except that oleyl alcohol (1 mol) was used instead of stearyl alcohol (1 mol), and the molar quantity of propylene oxide used in the first stage, ethylene oxide and propylene oxide used in the second stage, and propylene oxide used in the third stage was changed such that p, m, n, and q in General Formula (I) have the values shown in Table 1.

Synthesis Method of (a-11):

A nonionic surfactant agent (a-11) was obtained by the same method as that in the nonionic surfactant agent (a-1) except that stearyl alcohol (0.5 mol) and palmityl alcohol (0.5 mol) were used instead of stearyl alcohol (1 mol), and the molar quantity of propylene oxide used in the first stage, ethylene oxide and propylene oxide used in the second stage, and propylene oxide used in the third stage was changed such that p, m, n, and q in General Formula (I) have the values shown in Table 1.

Synthesis Method of (a'-10):

A nonionic surfactant agent (a'-10) was obtained by the same method as that in the nonionic surfactant agent (a-1) except that butylene oxide (6 mol) was used instead of propylene oxide (6 mol) in the first stage, and butylene oxide (17 mol) was used instead of propylene oxide (17 mol) in the third stage.

Synthesis Method of (a'-11):

A nonionic surfactant agent (a'-11) was obtained by the same method as that in the nonionic surfactant agent (a-1) except that stearic acid (1 mol) was used instead of stearyl alcohol (1 mol).

Synthesis Method of (a'-12):

A nonionic surfactant agent (a'-12) was obtained by the same method as that in the nonionic surfactant agent (a-1) except that glycerin (1 mol) was used instead of stearyl alcohol (1 mol), and the molar quantity of propylene oxide used in the first stage, ethylene oxide and propylene oxide used in the second stage, and propylene oxide used in the third stage was changed such that p, m, n, and q in General Formula (I) have the values shown in Table 3.
As the (b) component, the following compounds were used.

- (b-1): Oleic acid (manufactured by Junsei Chemical Co., Ltd., a reagent first grade)
- (b-2): Stearic acid (manufactured by Junsei Chemical Co., Ltd., a reagent first grade)
- (b-3): Isostearic acid (manufactured by Wako Pure Chemical Industries, Ltd., a reagent first grade)
- (b-4): Sodium Laurate (manufactured by Wako Pure Chemical Industries, Ltd., a reagent first grade)
- (b-5): Sodium Stearate (manufactured by Wako Pure Chemical Industries, Ltd., a reagent first grade)
- (b-6): Potassium Oleate (manufactured by Wako Pure Chemical Industries, Ltd., "19% Potassium Oleate Solution")
- (b-7): A mixture of 8 mass% of Stearic acid (manufactured by Wako Pure Chemical Industries, Ltd., a reagent first grade), 44 mass% of Oleic acid (manufactured by Wako Pure Chemical Industries, Ltd., a reagent first grade), 28 mass% of Linoleic acid (manufactured by Wako Pure Chemical Industries, Ltd., "Linoleic acid"), 5 mass% of Linolenic acid (manufactured by Wako Pure Chemical Industries, Ltd., "Linolenic acid") and 15 mass% of Isostearic acid (manufactured by Wako Pure Chemical Industries, Ltd., a reagent first grade).

Example 1

Manufacturing of Regenerated Pulp

Disintegration Step

As the raw material waste paper, newspaper and flier paper (a mass ratio: newspaper / flier paper = 6 / 4) were used. In addition, as the deinking agent, the nonionic surfactant agent (a-1) was used.
The raw material waste paper was cut into a length of 3 cm x a width of 5 cm, and then a suitable amount (60 g as the solid pulp content) of the raw material waste paper was put into a low concentration pulper (manufactured by KUMAGAI RIKI KOGYO Co., Ltd., a "low concentration pulper laboratory machine"). Further, 0.4 mass% (0.24 g) of sodium hydroxide, and 0.12 mass% (0.072 g) of the deinking agent were added with respect to the solid pulp content.
Next, warm water was added such that the solid pulp content concentration was 5 mass%, and thus 1200 g of the pulp slurry in total was subjected to a pulper treatment (the disintegration of the raw material waste paper) at 40°C for 10 minutes.

Flotation Step

800 g (40 g as the solid pulp content) of the pulp slurry after the pulper treatment which was obtained through the disintegration step and was sampled, and the pulp slurry was further diluted with warm water such that the solid pulp content concentration was 1 mass% (4000 g in a total amount). The total amount of the pulp slurry after being diluted was put into a flotator (manufactured by KUMAGAI RIKI KOGYO Co., Ltd., a "BOX type"), and was subjected to a flotation treatment at 40°C for 5 minutes, and foam (froth) including ink was removed from the pulp slurry from an upper portion of the flotator (one time per one minute, and in total, 5 times). Furthermore, the amount of air blown thereto was set such that the Gas/Liquid (G/L) ratio is 6.

Preparation of Test Paper

500 g of the pulp slurry after the flotation treatment was sampled, was diluted with 1000 g of water, and was made into paper by using a TAPPI sheet machine, a pulp sheet on filter paper was interposed between an SUS plate (manufactured by KUMAGAI RIKI KOGYO Co., Ltd.) and the filter paper, and was subjected to a press treatment for 5 minutes, and then test paper (regenerated pulp) A was prepared by drying the pulp sheet under room temperature.

Evaluation

Evaluation of Ink Peeling Properties

132 g of the pulp slurry which was obtained by the disintegration step after the pulper treatment was sampled, and was cleaned with 20 L of flowing water on a wire net having an opening of 108 μm, and the peeled out ink was completely removed. After the cleaning, the pulp on the wire net was diluted with 1000 g of water, and test paper B for evaluation of ink peeling properties was prepared by the same method as that in the preparation of the test paper.
The whiteness index (ISO, %) of the obtained test paper B was measured by using a color difference meter (manufactured by NIPPON DENSHOKU INDUSTRIES Co., LTD., "spectrocolor and whiteness meter PF-10"), and ink peeling properties were evaluated on the basis of the following evaluation criterion. It is indicated that the ink peeling properties are excellent as the whiteness index becomes higher. A result thereof is shown in Table 1. Furthermore, an upper portion in a section of the ink peeling properties in the table indicates the whiteness index, and a lower portion in the section indicates the evaluation.

A: The whiteness index is greater than or equal to 60% (a satisfactory level).
B: The whiteness index is greater than or equal to 59% and less than 60% (a usable level).
C: The whiteness index is greater than or equal to 58% and less than 59% (a level at which a trouble may occur at the time of being used).
D: The whiteness index is less than 58% (a completely unsuitable level for actual use at which the performance is extremely degraded).

Evaluation of Foaming Properties

The froth generated in the flotation step was collected one time for one minute, and in total, 5 times, the total amount (a total mass) of the collected froth was measured, and foaming properties were evaluated on the basis of the following evaluation criterion. A result thereof is shown in Table 1. Furthermore, an upper portion in a section of the foaming properties indicates a total mass of the froth, and a lower portion in the section indicates the evaluation.

A: The total mass of the froth is greater than 540 g and less than or equal to 560 g (an extremely suitable amount of foaming).
B: The total mass of the froth is greater than 520 g and less than or equal to 540 g (an operable amount of foaming).
C: The total mass of the froth is greater than 500 g and less than or equal to 520 g, or greater than 560 g (the amount of foaming is insufficient or excessive, and trouble may occur in the operation).
D: The total mass of the froth is less than 500 g (the amount of foaming is completely insufficient, and trouble may occur in the operation).

Evaluation of Ink Collecting Properties

The whiteness index (ISO, %) of the test paper A was measured by using a color difference meter (manufactured by NIPPON DENSHOKU INDUSTRIES Co., LTD., a "spectrocolor and whiteness meter PF-10"), and ink collecting properties were evaluated on the basis of the following evaluation criterion. It is indicated that the ink collecting properties are excellent and the quality of the regenerated pulp increases as the whiteness index becomes higher. A result thereof is shown in Table 1. Furthermore, an upper portion in a section of the ink collecting properties indicates the whiteness index, and a lower portion in the section indicates the evaluation.

A: The whiteness index is greater than or equal to 50% (there is no practical trouble, and the quality is extremely excellent).
B: The whiteness index is greater than or equal to 49% and less than 50% (there is no practical trouble, and the quality is excellent).
C: The whiteness index is greater than or equal to 48% and less than 49% (there is practical availability, but the quality is low).
D: The whiteness index is less than 48% (a quality at which a practical trouble may occur).

Evaluation of Ash Removal Properties

An evaporating dish used in the following measurement was dried at 80°C to 90°C for 18 hours in advance, then was cooled down to the room temperature in a desiccator, and then the mass was weighed. In addition, a crucible used in the following measurement was burned at 550°C for 5 hours in advance, then was cooled down to the room temperature in the desiccator, and then the mass was weighed.

(1) Measurement of Initial Ash (before Deinking)

Approximately 150 g (approximately 7.5 g as the solid pulp content) of the pulp slurry after the pulper treatment which was obtained by the disintegration step was sampled on the evaporating dish, was dried at 80°C to 90°C for 18 hours, and then was cooled down to the room temperature, and thus the pulp solid matter was obtained.
The obtained pulp solid matter was sufficiently mixed, a suitable amount (approximately 6 g) was sampled on a crucible having a mass (x1) from the pulp solid matter, and the mass (x2) of the crucible into which the pulp solid matter was put was weighed.
After that, the pulp solid matter was burned and ashed at 550°C, and was cooled in the desiccator. After the cooling, the mass (x3) of the crucible into which the ash was put was weighed, and the initial amount of the ash (the initial amount of the ash per the solid pulp content before the flotation step) (x4) was calculated by using the following Expression (4).

$$\text{Initial Amount of Ash (mass\%)} = [\{(x3) - (x1)\} / \{(x2) - (x1)\}] \times 100 \quad ...(4)$$

Furthermore, the initial ash mass (g) before the flotation step is 40 g of the solid pulp content mass before the flotation step x (the initial amount of the ash (mass%) / 100).

(2) Measurement of Ash Decreased by Flotation Step

The total mass (a total mass) of the collected froth which was measured in the evaluation of the foaming properties was set to (y1).
The collected froth was sufficiently mixed, and a suitable amount (approximately 150 g) was sampled on an evaporating dish having a mass (y3) from the froth, and the mass (y2) of the evaporating dish into which the froth was put was weighed.
After that, the froth was dried at 80°C to 90°C for 18 hours, and then was cooled down to the room temperature. After the cooling, the mass (y4) of the evaporating dish into which the solid matter was put was weighed, and the solid content total mass (y5) in all of the froth was calculated using the following Expression (5).

$$\text{Solid Content Total Mass in Total Froth (g)} = [(y1) / \{(y2) - (y3)\}] \times \{(y4) - (y3)\} \quad ...(5)$$

The solid matter remaining on the evaporating dish was sufficiently mixed, a suitable amount (approximately 1.5 g) was sampled on a crucible having a mass (y6) from the solid matter, and a mass (y7) of the crucible into which the solid matter was put was weighed.
After that, the solid matter was burned and ashed at 550°C, and then was cooled in the desiccator. After the cooling, a mass (y8) of the crucible into which the ash was put was weighed, and an ash total mass in all of the froth (the amount of ash decreased by the flotation step) (y9) was calculated by using the following Expression (6).

$$\text{Ash Total Mass in All of Froth (g)} = [(y5) / \{(y7) - (y6)\}] \times \{(y8) - (y6)\} \quad ...(6)$$

Here, a decrease in the amount of ash (y10) per the solid pulp content in the flotation step was calculated by using the following Expression (7) from a fact that the solid content of the pulp slurry used in the flotation step was 40 g.

$$\text{Decrease in Amount of Ash (mass\%)} = [(y9) / 40] \times 100 \quad ...(7)$$

Then, an ash removal rate in the flotation step was calculated by using the following Expression (8) from the initial amount of the ash (x4) which was obtained in advance and the decrease in the amount of the ash (y10).

$$\text{Ash Removal Rate (mass\%)} = [(y10) / (x4)] \times 100 \quad ...(8)$$

Ash removal properties were evaluated on the basis of the following evaluation criterion. A result thereof is shown in Table 1. Furthermore, an upper portion in a section of the ash removal properties indicates the ash removal rate, and a lower portion in the section indicates the evaluation.

A: The ash removal rate is greater than or equal to 30 mass% (the quality is excellent).
B: The ash removal rate is greater than or equal to 25 mass% and less than 30 mass% (a usable level).
C: The ash removal rate is greater than or equal to 20 mass% and less than 25 mass% (the quality is low without reaching the target quality).
D: The ash removal rate is less than 20 mass% (a completely unsuitable level for use).

Examples 2 to 21 and Comparative Examples 1 to 13

The regenerated pulp was produced by the same method as those in Example 1 except that the (a) component, or a mixture of the (a) component and the (b) component shown in Tables 1 to 3 was used as the deinking agent, and each evaluation was performed. A result thereof is shown in Tables 1 to 3.

Furthermore, when the mixture of the (a) component and the (b) component was used as the deinking agent, the (a) component and the (b) component were mixed such that the mass ratio thereof had a value shown in Tables 1 to 3, and 0.12 mass% (0.072 g) of the mixture was added to the solid pulp content.

[Table 1]

| | (a) Component | | | | | | | | (b) Component | | Evaluation | | | |
|---|---|---|---|---|---|---|---|---|---|---|---|---|---|---|
| | Type | R | p | m/n | q | Total AO | EO/Tolal AO | Random Ratio | Type | Mass Ratio (a/b) | Ink Peeling Properties (%) | Foaming Properties (g) | Ink Collecting Properties (%) | Ash Removal Properties (Mass%) |
| Example 1 | a-1 | $C_{18}H_{37}$- | 6 | 40/5 | 17 | 68 | 0.59 | 0.66 | - | - | 61.0 | 552 | 52.1 | 29 |
| | | | | | | | | | | | A | A | A | B |
| Example 2 | a-2 | $C_{18}H_{37}$- | 6 | 35/5 | 15 | 61 | 0.57 | 0.66 | - | - | 60.7 | 546 | 51.9 | 29 |
| | | | | | | | | | | | A | A | A | B |
| Example 3 | a-3 | $C_{18}H_{37}$- | 6 | 31/5 | 15 | 57 | 0.54 | 0.63 | - | - | 60.6 | 531 | 49.6 | 26 |
| | | | | | | | | | | | A | B | B | B |
| Example 4 | a-4 | $C_{18}H_{37}$- | 2 | 60/10 | 30 | 102 | 0.59 | 0.69 | - | - | 60.6 | 560 | 49.7 | 28 |
| | | | | | | | | | | | A | A | B | B |
| Example 5 | a-5 | $C_{18}H_{37}$- | 15 | 40/10 | 3 | 68 | 0.59 | 0.74 | - | - | 61.2 | 556 | 49.5 | 28 |
| | | | | | | | | | | | A | A | B | B |
| Example 6 | a-6 | $C_{18}H_{37}$- | 4 | 50/5 | 30 | 89 | 0.56 | 0.62 | - | - | 59.8 | 522 | 49.3 | 28 |
| | | | | | | | | | | | B | B | B | B |
| Example 7 | a-7 | $C_{12}H_{25}$- | 15 | 45/3 | 15 | 78 | 0.58 | 0.62 | - | - | 59.4 | 551 | 50.4 | 27 |
| | | | | | | | | | | | B | A | A | B |
| Example 8 | a-8 | $C_{16}H_{38}$- | 10 | 40/5 | 17 | 72 | 0,56 | 0,63 | - | - | 59.8 | 526 | 49.3 | 26 |
| | | | | | | | | | | | B | B | B | B |
| Example 9 | a-9 | $C_{22}H_{45}$- | 2 | 45/15 | 20 | 82 | 0.55 | 0.73 | - | - | 59.7 | 530 | 49.3 | 27 |
| | | | | | | | | | | | B | B | B | B |
| Example 10 | a-10 | $C_{18}H_{35}$- | 8 | 41/10 | 15 | 74 | 055 | 0.69 | - | - | 59.4 | 530 | 49.6 | 27 |
| | | | | | | | | | | | B | B | B | B |
| Example 11 | a-11 | $C_{16}H_{33}$-/$C_{18}H_{37}$- | 6 | 40/10 | 15 | 71 | 0.56 | 0.70 | - | - | 59.8 | 538 | 49.1 | 26 |
| | | | | | | | | | | | B | B | B | B |

[Table 2]

| | (a) Component | | | | | | | | (b) Component | | Evaluation | | | | | | | |
| --- | --- | --- | --- | --- | --- | --- | --- | --- | --- | --- | --- | --- | --- | --- | --- | --- | --- | --- |
| | Type | R | p | m/n | q | Total AO | EO/Total AO | Random Ratio | Type | Mass Ratio | Ink Peeling Properties (%) | | Foaming Properties (g) | | Ink Collecting Properties (%) | | Ash Removal Properties (Mass%) | |
| Example 12 | a-1 | $C_{18}H_{37}-$ | 6 | 40/5 | 17 | 68 | 0.59 | 0.66 | b-1 | 80/20 | 60.4 | A | 543 | A | 52.4 | A | 32 | A |
| Example 13 | a-1 | $C_{18}H_{37}-$ | 6 | 40/5 | 17 | 68 | 0.59 | 0.66 | b-1 | 70/30 | 60.4 | A | 542 | A | 52.2 | A | 32 | A |
| Example 14 | a-2 | $C_{18}H_{37}-$ | 6 | 35/5 | 15 | 61 | 0.57 | 0.66 | b-2 | 95/5 | 60.5 | A | 527 | B | 50.4 | A | 31 | A |
| Example 15 | a-2 | $C_{18}H_{37}-$ | 6 | 35/5 | 15 | 61 | 0.57 | 0.66 | b-2 | 90/10 | 60.2 | A | 523 | B | 50.9 | A | 30 | A |
| Example 16 | a-8 | $C_{16}H_{33}-$ | 10 | 40/5 | 17 | 72 | 0.56 | 0.63 | b-1 | 70/30 | 59.1 | B | 523 | B | 49.6 | B | 31 | A |
| Example 17 | a-1 | $C_{18}H_{37}-$ | 6 | 40/5 | 17 | 68 | 0.59 | 0.66 | b-3 | 90/10 | 60.3 | A | 521 | B | 52.7 | A | 32 | A |
| Example 18 | a-1 | $C_{18}H_{37}-$ | 6 | 40/5 | 17 | 68 | 0.59 | 0.66 | b-4 | 50/50 | 59.2 | B | 536 | B | 52.9 | A | 33 | A |
| Example 19 | a-2 | $C_{18}H_{37}-$ | 6 | 35/5 | 15 | 61 | 0.57 | 0.66 | b-5 | 97/3 | 60.5 | A | 544 | A | 52.2 | A | 30 | A |
| Example 20 | a-2 | $C_{18}H_{37}-$ | 6 | 35/5 | 15 | 61 | 0.57 | 0.66 | b-6 | 85/15 | 60.4 | A | 5 38 | B | 52.8 | A | 33 | A |
| Example 21 | a-1 | $C_{18}H_{37}-$ | 6 | 40/5 | 17 | 68 | 0.59 | 0.66 | b-7 | 75/25 | 60.3 | A | 541 | A | 53.4 | A | 36 | A |

[Table 3]

| | (a) Component | | | | | | | | (b) Component | | Evaluation | | | |
|---|---|---|---|---|---|---|---|---|---|---|---|---|---|---|
| | Type | R | p | m/n | q | Total AO | EO/Total AO | Random Ratio | Type | Mass Ratio (a/b) | Ink Peeling Properties (%) | Forming Properties (g) | Ink Collecting Properties (%) | Ash Removal Properties (Mass%) |
| Comparative Example 1 | a*-1 | $C_{18}H_{37}$- | 6 | 40/0 | 22 | 68 | 0.59 | 0.59 | - | - | 61.0 | 512 | 48.5 | 17 |
| | | | | | | | | | | | A | C | C | D |
| Comparative Example 2 | a*-2 | $C_{18}H_{37}$- | 6 | 45/10 | 0 | 61 | 0.74 | 0.90 | - | - | 59.7 | 538 | 47.5 | 16 |
| | | | | | | | | | | | B | B | D | D |
| Comparative Example 3 | a*-3 | $C_{18}H_{37}$- | 10 | 30/10 | 10 | 60 | 0.50 | 0.67 | - | - | 59.6 | 492 | 47.7 | 18 |
| | | | | | | | | | | | B | D | D | D |
| Comparative Example 4 | a*-4 | $C_{18}H_{37}$- | 0 | 35/5 | 22 | 62 | 0.56 | 0.65 | - | - | 57.8 | 534 | 48.5 | 18 |
| | | | | | | | | | | | D | B | C | D |
| Comparative Example 5 | a*-5 | $C_{18}H_{37}$- | 20 | 40/5 | 5 | 70 | 0.57 | 0.64 | - | - | 59.8 | 522 | 47.3 | 18 |
| | | | | | | | | | | | B | B | D | D |
| Compartive Example 6 | a*-6 | $C_{18}H_{37}$- | 2 | 80/15 | 20 | 117 | 0.68 | 0.81 | - | - | 59.4 | 581 | 48.4 | 17 |
| | | | | | | | | | | | B | C | C | D |
| Compartive Example 7 | a*-7 | $C_{18}H_{37}$- | 4 | 60/20 | 20 | 104 | 0.58 | 0.77 | - | - | 59.8 | 516 | 48.3 | 16 |
| | | | | | | | | | | | B | C | C | D |
| Comparative Example 8 | a*-8 | $C_{18}H_{37}$- | 2 | 25/5 | 35 | 67 | 0.37 | 0.45 | - | - | 58.7 | 490 | 47.3 | 17 |
| | | | | | | | | | | | C | D | D | D |
| Comparative Example 9 | a*-9 | $C_{18}H_{37}$- | 15 | 70/15 | 25 | 125 | 0.56 | 0.68 | - | - | 59.2 | 578 | 47.6 | 18 |
| | | | | | | | | | | | B | C | D | D |
| Comparative Exampel 10 | a*-4 | $C_{18}H_{37}$- | 0 | 35/5 | 22 | 62 | 0.56 | 0.65 | b-1 | 70/30 | 57.8 | 484 | 47.9 | 19 |
| | | | | | | | | | | | D | D | D | D |
| Comparative Example 11 | a¹-10 | $C_{18}H_{37}$- | $(PO)_0 (BO)_6$ | 40/5 | $(PO)_0 (BO)_{17}$ | 68 | 0.59 | 0.66 | - | - | 57.2 | 526 | 48.4 | 16 |
| | | | | | | | | | | | D | B | C | D |

EP 2 947 200 B1

(continued)

| | (a) Component | | | | | | | | (b) Component | | Evaluation | | | |
|---|---|---|---|---|---|---|---|---|---|---|---|---|---|---|
| | Type | R | p | m/n | q | Total AO | EO/Total AO | Random Ratio | Type | Mass Ratio (a/b) | Ink Peeling Properties (%) | Forming Properties (g) | Ink Collecting Properties (%) | Ash Removal Properties (Mass%) |
| Comparative Example 12 | a$^1$-11 | C$_{17}$H$_{35}$CO- | 6 | 40/5 | 17 | 68 | 0.59 | 0.66 | - | - | 57.0 | 510 | 47.1 | 17 |
| | | | | | | | | | | | D | C | D | D |
| Comparative Example 13 | a$^1$-12 | *1) | 5 | 40/10 | 10 | 65 | 0.62 | 0.77 | b-2 | 80/20 | 57.6 | 533 | 47.6 | 19 |
| | | | | | | | | | | | D | B | D | D |

*1) : Glycerin {HO-CH$_2$CH(-OH)CH$_2$-OH} was used as a starting sybstance, and PO and EO were added and synthesized.

Furthermore, in Tables 1 to 3, a section of "total AO" indicates a total average number of repetitions (p + m + n + q) of total AO (oxyalkylene group) in the nonionic surfactant agent, a section of "EO/total AO" indicates the ratio (m / (p + m + n + q)) of EO to total AO in the nonionic surfactant agent, and a section of "random ratio" indicates a random ratio ((m + n) / (p + m + n + q)) of total AO in the nonionic surfactant agent.

As is obvious from Tables 1 and 2, the deinking agent used in each example has excellent ink peeling properties, foaming properties, ink collecting properties, and ash removal properties. In particular, Examples 12 to 21 in which the mixture of the (a) component and the (b) component was used as the deinking agent have more excellent ash removal properties.

On the other hand, as is obvious from Table 3, the deinking agent used in each comparative example has degraded ash removal properties. In addition, none of the comparative examples satisfies all of the ink peeling properties, the foaming properties, and the ink collecting properties. In addition, from the result of Comparative Example 10 or Comparative Example 13, it is found that, when the surfactant agent other than the nonionic surfactant agent represented by General Formula (I) is used, it is not possible to obtain the improvement effect of the ash removal properties even when the (b) component is used together therewith.

**Claims**

1. A deinking agent for flotation containing an (a) component which is a nonionic surfactant agent represented by the following General Formula (I).

$$R\text{-}O\text{-}(PO)_p\text{-}[(EO)_m/(PO)_m]\text{-}(PO)_q\text{-}H \qquad (I)$$

(In Formula (I), R represents an alkyl group or an alkenyl group having 12 to 24 carbon atoms, PO represents an oxypropylene group, EO represents an oxyethylene group, p represents the average number of repetitions of PO which is 1 to 15, m represents the average number of repetitions of EO which is 31 to 60, n represents the average number of repetitions of PO which is 1 to 15, and q represents the average number of repetitions of PO which is 3 to 30. $[(EO)_m/(PO)_n]$ represents random addition of EO and PO.)

2. The deinking agent for flotation according to Claim 1, wherein p, m, n, and q satisfy the following Expression (1).

$$61 \le p + m + n + q \le 120 \quad ...(1)$$

3. The deinking agent for flotation according to Claim 1 or 2, wherein p, m, n, and q further satisfy the following Expression (2) and the following Expression (3).

$$0.55 \le m / (p + m + n + q) \le 0.65 \quad ...(2)$$

$$0.60 \le (m + n) / (p + m + n + q) \le 0.75 \quad ...(3)$$

4. The deinking agent for flotation according to any one of Claims 1 to 3, further containing a (b) component which is a fatty acid having 12 to 24 carbon atoms or a salt thereof.

5. The deinking agent for flotation according to Claim 4, wherein a mass ratio represented by (a) component/(b) component is 40/60 to 99/1.

6. A method of producing regenerated pulp which obtains the regenerated pulp by peeling out ink from raw material waste paper, and by removing the peeled out ink using a flotation method, the method comprising:

   removing the ink by using the deinking agent for flotation according to any one of Claims 1 to 5.

**Patentansprüche**

1.  Entfärbungsmittel für Flotation, das eine Komponente (a) enthält, bei der es sich um ein nichtionisches Tensid handelt, die durch die folgende allgemeine Formel (I) dargestellt ist.

$$R-O-(PO)_p-[(EO)_m/(PO)_n]-(PO)_q-H \ ... \qquad (I)$$

(In der Formel (I), repräsentiert R eine Alkylgruppe oder eine Alkenylgruppe mit 12 bis 24 Kohlenstoffatomen, PO repräsentiert eine Oxypropylengruppe, EO repräsentiert eine Oxyethylengruppe, p repräsentiert die durchschnittliche Anzahl der Wiederholungen von PO, die zwischen 1 und 15 liegt, m repräsentiert die durchschnittliche Anzahl der Wiederholungen von EO, die zwischen 31 und 60 liegt, n repräsentiert die durchschnittliche Anzahl der Wiederholungen von PO die zwischen 1 und 15 liegt, und q repräsentiert die durchschnittliche Anzahl der Wiederholungen von PO die zwischen 3 und 30 liegt. $[(EO)_m/(PO)_n]$ repräsentiert eine zufällige Zugabe von EO und PO)

2.  Entfärbungsmittel für Flotation gemäß Anspruch 1,
    wobei p, m, n, und q die folgende Bedingung (1) erfüllen.

$$61 \le p + m + n + q \le 120 \ ...(1)$$

3.  Das Entfärbungsmittel für Flotation gemäß Anspruch 1 oder 2,
    wobei p, m, n, und q weiterhin die folgende Bedingung (2) und die folgende Bedingung (3) erfüllen

$$0{,}55 \le m / (p + m + n + q) \le 0{,}65 \ ...(2)$$

$$0{,}55 \le m + n)/ (p + m + n + q) \le 0{,}75 \qquad ...(3)$$

4.  Entfärbungsmittel für Flotation nach einem der Ansprüche 1 bis 3, das weiterhin eine Komponente (b) enthält, bei der es sich um eine Fettsäure mit 12 bis 24 Kohlenstoffatomen oder deren Salze handelt.

5.  Entfärbungsmittel für Flotation gemäß Anspruch 4,
    wobei ein Massenverhältnis dargestellt durch Komponente (a) / Komponente (b) zwischen 40/60 und 99/1 beträgt.

6.  Verfahren zur Herstellung von regenerierter Pulpe, bei dem die regenerierte Pulpe dadurch erhalten wird, dass Tinte aus Recycling-Papier - Rohmaterial gelöst wird und die gelöste Tinte durch ein Flotationsverfahren entfernt wird, dieses Verfahren umfasst:

    die Entfernung der Tinte unter Verwendung des Entfärbungsmittels für Flotation nach einem der Ansprüche 1 bis 5.

**Revendications**

1.  Agent de désencrage pour flotation contenant un (a) composant qui est un agent surfactant non ionique représenté par la formule générale (I).

$$R-O-PO)_p-[(EO)_m/(PO)_n]-(PO)_q-H \qquad (I)$$

(Dans la formule (I), R représente un groupe alkyle ou un groupe alkényle ayant de 12 à 24 atomes de carbone, PO représente un groupe oxypropylène, EO représente un groupe oxyéthylène, p représente le nombre moyen de répétitions de PO qui est de 1 à 15, m représente le nombre moyen de répétitions de EO qui est de 31 à 60, n représente le nombre moyen de répétitions de PO qui est de 1 à 15, et q représente le nombre moyen de répétitions de PO qui est de 3 à 30. $[(EO)_m/(PO)_n]$ représente l'ajout aléatoire de EO et PO.)

**2.** Agent de désencrage pour flotation selon la revendication 1,
dans lequel p, m, n et q satisfont l'expression suivante (1).

$$61 \leq p + m + n + q \leq 120 \quad (1)$$

**3.** Agent de désencrage pour flotation selon la revendication 1 ou 2,
dans lequel p, m, n et q satisfont en outre l'expression (2) ci-après et l'expression (3) ci-après.

$$0,55 \leq m / (p + m + n + q) \leq 0,65 \quad (2)$$

$$0,60 \leq (m + n) / (p + m + n + q) \leq 0,75 \quad (3)$$

**4.** Agent de désencrage pour flotation selon l'une quelconque des revendications 1 à 3, contenant en outre un (b) composant qui est un acide gras ayant de 12 à 24 atomes de carbone ou un sel desdits.

**5.** Agent de désencrage pour flotation selon la revendication 4,
dans lequel un ratio en masse représenté par (a) composant/(b) composant est 40/60 à 99/1.

**6.** Procédé de préparation de pâte à papier recyclée qui obtient la pâte à papier recyclée en pelant l'encre de déchets de papier bruts, et en retirant l'encre pelée en utilisant un procédé de flotation, le procédé comprenant l'étape consistant à :

retirer l'encre en utilisant l'agent de désencrage pour flotation selon l'une quelconque des revendications 1 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05186985 A
- JP H05263379 A
- JP H073681 A

- JP 2007063699 A
- JP H06287878 A